Europäisches Patentamt

European Patent Office

Office européen des brevets

(19)

(11) Veröffentlichungsnummer: **0 141 095**
**B1**

(12) **EUROPÄISCHE PATENTSCHRIFT**

(45) Veröffentlichungstag der Patentschrift: **02.01.91**

(51) Int. Cl.⁵: **H 04 B 10/00**

(21) Anmeldenummer: **84109752.0**

(22) Anmeldetag: **16.08.84**

(54) Optisches Übertragungssystem für Duplex-Betrieb.

(30) Priorität: **27.09.83 DE 3334839**

(43) Veröffentlichungstag der Anmeldung:
**15.05.85 Patentblatt 85/20**

(45) Bekanntmachung des Hinweises auf die
Patenterteilung:
**02.01.91 Patentblatt 91/01**

(84) Benannte Vertragsstaaten:
**AT CH DE FR GB IT LI NL SE**

(56) Entgegenhaltungen:
FR-A-2 462 067
US-A-4 161 650

NTZ NACHRICHTENTECHNISCHE ZEITSCHRIFT,
Band 33, Nr. 12, Dezember 1980, Seiten 794-799,
Berlin, DE; R.M. STACH et al.: "34-Mbit/s-
Lichtwellenleitersystem"

(73) Patentinhaber: **Richard Hirschmann GmbH & Co.**
**Richard-Hirschmann-Strasse 19 Postfach 110**
**D-7300 Esslingen a.N. (DE)**

(72) Erfinder: **Ludolf, Wilhelm, Dr.**
**Wilhelm-Röntgen-Strasse 40**
**D-7302 Ostfildern 1 (DE)**
Erfinder: **Schenkyr, Rainer, Dipl.-Ing.**
**Meisenweg 16**
**D-7050 Waiblingen (DE)**
Erfinder: **Sommer, Rolf-Dieter, Dipl.-Ing.**
**Lonseerstrasse 9**
**D-7000 Stuttgart 61 (Hedelfingen) (DE)**

(74) Vertreter: **Stadler, Heinz, Dipl.-Ing.**
**Richard Hirschmann Radiotechnisches Werk**
**Richard-Hirschmann-Strasse 19**
**D-7300 Esslingen a.N. (DE)**

# Beschreibung

Die Erfindung betrifft ein optisches Übertragungssystem für Duplex-Betrieb, bei dem der optische Sender und der optische Empfänger jeder Anschlußstelle der Übertragungsstrecke von der selben Spannungsquelle versorgt werden.

Bei derartigen, zum Beispiel aus dem Buch "Optoelektronik Kurz und bündig" von Schmidt/ Feustel, Vogel-Verlag 1975, Seiten 65, 69, 137, 160, 172 und 220, bekannten Sender- und Empfängerschaltungen für optische Übertragungssysteme, wie sie etwa bei Bus-Systemen von Rechnern verwendet werden, erfolgt die Betriebsstromversorgung von Sender und Empfänger im Parallelbetrieb. Diese Art der Speisung ist wegen ihrer Einfachheit in allen Fällen sinnvoll, in denen keine Begrenzung der Leistung oder des Stromes gefordert ist. Wenn jedoch ein minimaler Stromverbrauch angestrebt wird — beispielsweise zur Erzielung einer hohen Lebensdauer und/oder kleiner Abmessung batteriegespeister Geräte — oder nur eine geringe Leistungsaufnahme der Anschlußstelle zulässig ist — etwa bei optischer Informationsübertragung in explosionsgeschützten Räumen — ist die Parallelspeisung häufig nicht mehr möglich. Zum Beispiel steht bei einer Spannung von 12 Volt und einer höchstzulässigen Leistung von 0,12 Watt nur ein Strom von 10 Milliampere zur Verfügung; dieser reicht jedoch nur knapp zur Versorgung des optischen Senders aber nicht zugleich auch des Empfängers aus. In solchen Fällen wurden bisher getrennte Spannungsquellen für die Betriebsstromversorgung des optischen Senders und Empfängers verwendet und das Übertragungssystem damit wesentlich verteuert.

Der Erfindung liegt die Aufgabe zugrunde, ein Übertragungssystem der eingangsgenannten Art zu schaffen, das auf möglichst einfache und kostengünstige Weise auch für kleine Speiseströme beziehungsweise Speiseleistung en geeignet ist.

Diese Aufgabe ist dadurch gelöst, daß der optische Sender und der optische Empfänger wenigstens einer Anschlußstelle bezüglich der Stromversorgung in Serie geschaltet sind und der optische Empfänger mit einer Zusatzschaltung eine Empfangseinheit bildet, die eine von der Ausgangsspannung des optischen Empfängers unabhängige Stromaufnahme aufweist. Die in bekannten praktischen Anwendungsfällen zur Verfung stehend Speisespannung reicht für den Betrieb der Sender- und Empfängerelektronik in aller Regel aus. Durch die erfindungsgemäße Serienschaltung ist nunmehr der Speisestrom so weit reduziert, daß eine hohe Batterielebensdauer gewährleistet ist und die in der Praxis relevanten Anforderungen an die Höchstwerte von Strom — beziehungsweise Leistungsaufnahme — stets erfüllbar sind.

Zugleich ist durch die Zusatzschaltung eine hinsichtlich der Stromaufnahme konstante Last (Empfangseinheit) gebildet und somit wirksam vermieden, daß sich durch Schankungen des Empfänger-Ausgangssignals (zum Beispiel Änderungen des logischen Zustandes bei einem digitalen Ausgangssignal) über entsprechende Schwankungen der Stromafnahme des Empfängers und damit des Stromes durch die Sender-LED unzulässige Änderungen des optischen Sender-Ausgangssignals ergeben können.

Zur einfachen Realisierung dieser konstanten Last ist eine Ausbildung der Empfangseinheit gemäß Anspruch 2 besonders geeignet, wobei für die gesteuerte Stromquelle eine Reihe an sich bekannter, nach den Bedürfnissen des Einzelfalls auszuwählender Schaltungen zur Verfügung steht.

In den Ansprüchen 3 und 4 sind zwei zweckmäßige Möglichkeiten zur Erzeugung des Steuersignals für die gesteuerte Stromquelle angegeben.

Das erfindungsgemäße Übertragungssystem eignet sich im Gegensatz zum Stand der Technik auch zum Aufbau ganzer Übertragungslinien gemäß Anspruch 5, wobei die an beliebigen Stellen (auch nachträglich) in die Betriebsstromleitung einschaltbaren Anschlußstellen entweder als Endgeräte oder als Regeneratoren in einer durchgehenden optischen Verbindung verwendbar sind.

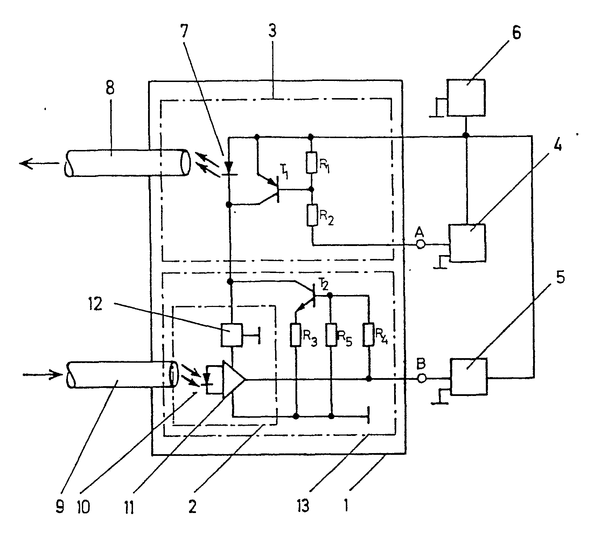

Die Figur zeigt den prinzipiellen Shaltungsaufbau eines als batteriegespeistes digitales Endgerät aufgebauten Ausführungsbespieles einer Anschlüßstelle des erfindungsgemäßen optischen Übertragungssystem für Steuerzwecke.

Die Anschlußstelle 1 besteht aus einem optischen Empfänger 2, einem optischen Sender 3, einer Tastatur 4, einer Anzeigeeinrichtung 5 (7-Segment-Display), sowie einer Batterie 6 zur Betriebsstromversorgung der angeführten Geräte 2 bis 5.

Der von der Tastatur 4 angesteuerte Sender 3 ist aus einer LED 7, aus der die optischen Signale direkt in einen abgehenden Lichtwellenleiter 8 ausgekoppelt werden, einem Schalttransistor $T_1$ sowie einem Basisspannungsteiler $R_1$, $R_2$ zur Pegelanpassung aufgebaut.

Die über einen Lichtwellenleiter 9 ankommenden optischen Signale werden direkt in eine Fotodiode 10 eingekoppelt, deren mittels eines Verstärkers 11 verstärktes elektrisches Ausgangssignal der Anzeigeeinrichtung 5 zugeführt wird.

Bezüglich der Versorgungsspannung aus der Batterie 6 sind Empfänger 2 und Sender 3 in Serie geschaltet. Auf diese Weise ist die Anschlußstelle 1 auch für kleine Versorgungsströme beziehungsweise — Leistungen geeignet, sodaß einerseits der Einsatz kostengünstiger, langlebiger und kleiner Batterien und andererseits spezielle Anwendungen wie zum Beispiel Datenübertragung in explosionsgeschützten Räumen ermöglicht sind.

Zur empfängerseitigen Stabilisierung der Versorgungsspannung unabhängig von der Batteriespannung und vom Schaltzustand des Transistors $T_1$ des optischen Senders 3 ist dem Verstärker 11 ein Konstantspannungsregler 12 vorgeschaltet.

Ohne zusätzliche Maßnahmen hätte nun jede

2

Änderung des logischen Zustandes des Ausgangssignals des optischen Empfängers 2 eine entsprechende Schwankung von dessen Stromaufnahme und damit eine unzulässige Änderung der vom optischen Sender 3 in den Lichtwellenleiter 8 ausgekoppelten Lichtleistung zur Folge. Diese unerwünschte Rückwirkung ist auf einfache und wirkungsvolle Weise dadurch unterbunden, daß der optische Empfänger 2 mit einer dazu parallelen veränderbaren Stromquelle $T_2$, $R_3$ zu einer Empfangseinheit 13 zusammengeschaltet ist, bei der die Basis des in Emitterschaltung betriebenen Transistors $T_2$ von der Ausgangsspannung des Verstärkers 11 über einen ohmschen Widerstand $R_4$ angesteuert wird und der Eingangsstrom durch entsprechende Bemessung dieses Widerstandes $R_4$ sowie eines weiteren zwischen Basis und Masse eingeschalteten ohmschen Widerstandes $R_5$ konstant gehalten ist.

Die beschriebene Anschlußstelle 1 kann durch leitende Verbindung der Schaltungspunkte A und B auf einfache Weise in eine Regenerationsstufe umgewandelt und vorteilhaft in durchgehenden optischen Verbindungen eingesetzt werden.

**Patentansprüche**

1. Optisches Übertragungssystem für Duplex-Betrieb, bei dem der optische Sender und der optische Empfänger jeder Anschlußstelle der Übertragungsstrecke von derselben Spannungsquelle versorgt werden, dadurch gekennzeichnet, daß der optische Sender (3) und der optische Empfänger (2) wenigstens einer Anschlußstelle (1) bezüglich der Stromversorgung in Serie geschaltet sind und der optische Empfänger (2) mit einer Zusatzschaltung eine Empfangseinheit (13) bildet, die ein von der Ausgangsspannung des optischen Empfängers (2) unabhängige Stromaufnahme aufweist.

2. Optisches Übertragungssystem nach Anspruch 1, dadurch gekennzeichnet, daß die Zusatzschaltung eine dem optischen Empfänger parallelgeschaltete gesteuerte Stromquelle ($T_2$, $R_3$) ist.

3. Optisches Übertragungssystem nach Anspruch 2, dadurch gekennzeichnet, daß das Steuersignal für die gesteuerte Stromquelle ($T_2$, $R_3$) durch einen zwischen optischen Sender (3) und Empfangseinheit (13) eingeschalteten Meßwiderstand mit Verstärker erzeugt ist.

4. Optisches Übertragungssystem nach Anspruch 2, dadurch gekennzeichnet, daß die Ausgangsspannung des optischen Empfängers (2) das Steuersignal für die gesteuerte Stromquelle ($T_2$, $R_3$) bildet.

5. Optisches Übertragungssystem nach einem der Ansprüche 1 bis 4, dadurch gekennzeichnet, daß wenigstens zwei Anschlußstellen in Serie geschaltet und aus der gleichen Spannungsquelle über lediglich eine Leitung gespeist sind.

**Revendications**

1. Système de transmission optique en duplex, dans lequel l'émetteur optique et le récepteur optique de chaque point de raccordement du circuit de transmission sont alimentés par la même source de tension électrique, caractérisé en ce que l'émetteur optique (3) et le récepteur optique (2) d'au moins un point de raccordement (1) sont montés en série pour ce qui concerne leur alimentation en courant électrique et que le récepteur optique (2) forme avec un circuit supplémentaire une unité réceptrice (13) qui consomme du courant indépendamment de la tension de sortie du récepteur optique (2).

2. Système de transmission optique selon la revendication 1, caractérisé en ce que le circuit supplémentaire est une source de courant régulée, montée en parallèle avec le récepteur optique (T2, R3).

3. Système de transmission optique selon la revendication 2, caractérisé en ce que le signal de commande pour la source de courant régulée (T2, R3) est généré par une résistance série à amplificateur, connectée entre l'émetteur optique (3) et l'unité réceptrice (13).

4. Système de transmission optique selon la revendication 2, caractérisé en ce que la tension de sortie du récepteur optique (2) constitue le signal de commande pour la source de courant régulée (T2, R3).

5. Système de transmission optique selon l'une des revendications 1 à 4, caractérisé en ce qu'au moins deux points de raccordement sont montés en série et sont alimentés à partir de la même source de tension, par l'intermédiaire d'un seul conducteur.

**Claims**

1. Duplex optical transmission system in which the optical transmitter and the optical receiver at every connection point in the transmission link are powered by the same voltage source, characterized by the fact that the optical transmitter (3) and the optical receiver (2) of at least one connection point (1) are connected in series with respect to the power supply, and the optical receiver (2) in conjunction with a supplementary circuit forms a receiving unit (13) which exhibits a power consumption independent of the output voltage of the optical receiver (2).

2. Optical transmission system as claimed in claim 1, characterized by the fact that the supplementary circuit is a controlled power source ($T_2$, $R_3$) connected in parallel to the optical receiver.

3. Optical transmission system as claimed in claim 2, characterized by the fact that the control signal for the controlled power source ($T_2$, $R_3$) is generated by a measuring shunt incorporated between a second optical transmitter (3) and receiver unit (13).

4. Optical transmission system as claimed in claim 2, characterized by the fact that the output voltage of the optical receiver (2) forms the contjol signal for the controlled power source ($T_2$, $R_3$).

5. Optical transmission system as claimed in any of the claims 1 to 4, characterized by the fact that at least two connection points are connected in series and are powered by the same power source via only one line.